# NEW EUROPEAN PATENT SPECIFICATION

(11) **EP 0 169 878 B2**
(45) Date of publication and mention of the opposition decision: **30.03.1994**
(45) Mention of the grant of the patent: 19.08.1987
(21) Application number: 85900817.9
(22) Date of filing: 30.01.1985
(51) Int. Cl.: H02J 7/00, F25D 29/00

(54) **ENERGY SAVING REFRIGERATION APPARATUS HAVING A CONTROL MEANS**
ENERGIESPARENDE GEFRIERVORRICHTUNG MIT REGELUNGSMITTELN
APPAREIL DE REFRIGERATION A ECONOMIE D'ENERGIE DOTE D'UN MECANISME DE REGULATION

(30) Priority: 01.02.1984 SE 8400514
(43) Date of publication of application: 05.02.1986
(73) Proprietor: THERMO PRODUKTER B.S. AB, S-391 27 Kalmar (SE)
(72) Inventor: STENVINKEL, Bengt, S-391 27 Kalmar (SE)
(74) Representative: Avellan-Hultman, Olle
(86) International application number: PCT/SE85/00043
(87) International publication number: WO 85/03603

(56) References cited:
- DE-A- 2 726 954
- DE-C- 610 450
- US-A- 4 425 766
- WAECO leaflet: "Kühlaggregate mit Speicherplatte COOLMATIC DCU/S2
- "Kühlaggregate im mobilien Einsatz COOLMATIC DCU"
- Kissmann leaflet: "Die Strom-Schoner von Indel Kissmann", October 1983

## Description

The present invention generally relates to a battery driven refrigeration apparatus.

In vehicles and boats the supply of electric energy is very different if the motor is running and if the motor is not running, that is if the generator is recharging the batteries or not. In transport cars and especially in boats there is often a need of large amounts of electric energy for lighting, heating, refrigeration purposes etc. at times when the motor is not running. For offering a sufficient amount of electric energy attempts have been made to give cars and boats on increasing battery capacity, often several batteries, and stronger and stronger generators. Depending on the restricted ability of the batteries to become recharged this has not been an ideal solution of the problem, and in order to obtain a sufficient recharging of the battery or the batteries it has often been necessary to run the motor for a longer period than would otherwise habe been necessary.

For reducing the energy consumption different attempts have been made to reduce the current consumption of the electric apparatus. In this connection refrigeration apparatus provide special problems since the refrigeration needs often exceed the available electric capacity. For increasing the stored cooling capacity some refrigeration apparatus have been formed with a so called eutectic cooler plate which is mounted in the fridge or the cooling box instead of the conventional cooler slings.

The eutectic cooler plate is a closed body containing a spirit or salt solution having a very low freezing temperature, for instance -15 to -20 °C. By connecting the refrigeration apparatus while the motor is operating, so that the eutectic cooling plate obtains such very low temperature, such an amount of accumulated cooling energy is obtained that the eutectic plate normally maintains the coole of the fridge or the cooling box for many hours even if the motor is not running, for instance as long as 15-20 hours.

DE-C 610 450 and DE-A-2 726 954 disclose similar apparatus which are controlled by a nighttime tariff clock.

The invention relates to a refrigeration apparatus of the above mentioned type, as defined by claim 1. Furthermore the control device which senses the voltage over the battery pools may thereby also check if the motor is running or not. Thereby the control device choses two different cooling ranges, viz. a low cooling range utilized if the motor is not running and high cooling range if the motor is running. The control device operates based on the fact that the voltage over the battery pools at charge condition is higher than a specific voltage level whereas the voltage over the battery pools at non-charge state is on a lower voltage level. In the first mentioned case the cooling compressor is operated until the cooling medium of the eutectic plate has completely or partly become frozen to ice, for instance a temperature of between -8 °C and -15 °C, in the latter case the cooling compressor is operated only until the still liquid medium of the eutectic cooler plate has obtained a temperature of for instance -2 °C and -6°C.

Further caracteristics of the invention will be evident from the following detailed specification in which reference will be made to the accompanying drawings. It is, however, to be understood that the following descriptions and the embodiments shown in the drawings are only illustrative examples and that many different modifications may be presented within the scope of the appended claims.

In the drawings figure 1 diagramatically shows a system according to the invention including a compressor driven refrigeration apparatus having a eutective cooler plate. Figure 2 is a block diagram over an electronic control device for the compressor driven refrigeration apparatus. Figure 3 illustrates a practically noticed operation scheme for a refrigeration apparatus according to the invention.

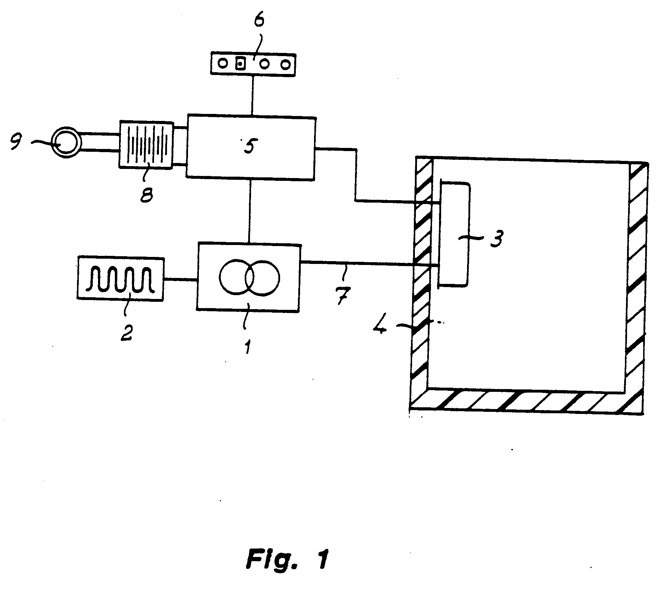

The refrigeration apparatus shown in figure 1 comprises a cooling compressor 1 which as usual has a primary condensor or cooler 2 and on the secondary side has a eutective cooler plate 3 mounted on a wall of a cooling box 4. For controlling the apparatus, and for utilizing the avaliable electric energy as energy saving as possible the apparatus is formed with a control device 5 according to the invention and a heading unit 6 connected to the control device 5.

The compressor 1 and the primary condensor or cooler 2 are of conventional type and need not be described in detail. The eutectic plate 3 connected on the secondary side of the compressor comprises a closed container which over a closed conduit system 7 is connected to the compressor, and which comprises a cooling medium, for instance a spirit solution, a salt solution, an oil or any similar cooling medium as known to the expert and which at a certain temperature starts freezing and which at a substantially lower temperature is completely freezed. For this purpose any known cooling medium may be used, and the cooling medium is adapted to the temperature intended to be reached, to the charging capacity of the motor, to the intended time of maintaining the chilliness without running the motor and to the intended cooling charge, to the expected ambient temperatures and to the isolation of the fridge or the cooling box and other factures.

For the following description and in an embodiment of the invention an eutectic cooler plate has been used for the cooling medium of which starts freezing at -8 °C and which can be cooled as far as to at least -15 °C.

The compressor is adapted to be driven by an accumulator battery 8 which is charged by a non-illustrated motor having a generator 9 which is connected to the control device 5 for supervising the voltage over the battery pools and thereby checking whether the motor is running (is charging the battery) or not.

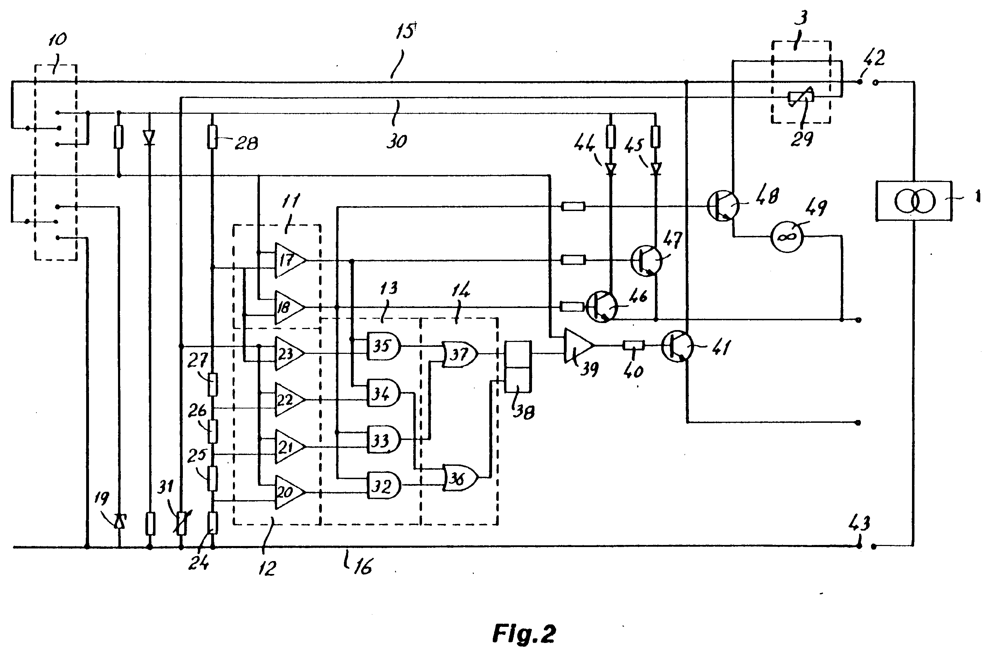

The object of the control system shown in figure 2 is to supply current to the cooling compressor 1 under given prerequisites so that said cooling compressor operates with optimum cooling effect at minimum consumption of energy from the batteries. For the sake of clearness in the following specification it is presupposed that the control unit is to operate on two different cooling levels, viz. a first level between -2 and -6 °C, which level is chosen if the voltage over the battery or the batteries indicates that there is no charging of the battery, viz. if the motor is not running, and a second level between -8 and -15 °C, which level is chosen if the voltage over the battery pools indicate that the battery or batteries are being charged. This is observed in that the pool voltage is at charge voltage or below charge voltage, which for 12 V batteries is put above and below 12,6 V respectively and for 24 V batteries above and below 26,0 V respectively. At the first level the compressor consequently is connected for operation when the cooling medium temperature of the eutectic cooler plate has raised to -2 °C, and it is disconnected when the temperature has dropped to -6 °C. The apparatus enters this stage when a main switch having connection and disconnection functions of the control device 5 has been switched on, and the compressor operates intermitently and thereby maintains the temperature of the fridge or the cooling box on a suitable cooling level. This low cooling level operation goes on until the current is disconnected in that the main switch of the control device 5 is switched of, or until the motor is started and the generator thereof starts charging the battery.

The electronic control system generally comprises a three way switch 10, a voltage selection system 11 a temperature sensing system 12, and AND gate system 13, an OR gate system 14 and means for providing the intended function depending on the state of said gates.

The positive battery pool is connected to a first main conduit 15 of the control system and the negative battery pool is connected to a second main conduit of the control system. The three way switch 10 which is of manual type can take three different position, viz. a neutral position which is marked in figure 2 and at which the entire refrigerator is disconnected, an automatic function position corresponding to an up-position in figure 2 and in which the compressor is connected and disconnected respectively in accordance with a predetermined voltage limit, and a positively controlled position corresponding to a down position in figure 2 and in which the compressor is operated independently of the voltage and temperature limits.

The voltage selection system comprises two comparators 17 and 18 having the voltage 0 or operated with a limit voltage which for a 12 V system may be 5,6 V. The said limit voltage is received on a zener diode 19 of 5,6 V. The comparator 17 is adapted to emit a signal when the observed pool voltage is < 12,6 V (12 V system) or < 26 V (24 V system), and the comparator 18 is adapted to emit a signal when the observed pool voltage is > 12,6 V or > 26 V respectively.

The temperature sensing system 12 comprises four OP amplifiers (operation amplifiers) 20, 21, 22 and 23. Said OP amplifiers sense voltages of four fixed levels provided by five resistances 24, 25, 26, 27 and 28 connected in series. The first resistance 24 is connected between the minus pool 16 and the first OP amplifier 20, the second resistance 25 between the amplifiers 20 and 21, the third resistance 26 between the amplifiers 21 and 22, the fourth resistance 27 between the amplifier 22 and the voltage selection system 11 and the fifth resistance 28 between the voltage selection system 11 and the positive battery conduit 15.

The OP amplifiers compare said values with a NTC resistance 29 (Negative Temperature Coefficient) which over a conduit 30 is connected to an input of each OP amplifier 20-23: The NTC resistance 29 is mounted on the eutectic cooler plate 3 (compare figure 1) and is in direct contact with the centre of said plate. In order to make it possible to adjust the actual values when manufacturing the apparatus a trimming potentiometer 31 is connected in series between NTC resistance 29 and the negative battery conduit 16.

The four OP amplifiers 20-23 are calculated to give signal at suitable connection and disconnection temperatures, and as an example :
The OP amplifier 20 gives signal at < -15 °C
The OP amplifier 21 gives signal at > -8 °C
The OP amplifier 22 gives signal at < -6°C,
and
The OP amplifier 23 gives signal at > -2°.

The comparators 17 and 18 of the voltage system 11 and the OP amplifiers 20-23 of the temperature system 12 are connected to four AND gates 32, 33, 34 and 35 of the type requesting signal at both inputs for giving an output signal. Two of the AND gates 32 and 34 are connected for the voltage condition < 12,6 V and the two remaining AND gates 33 and 35 are connected for the voltage condition > 12,6 V. The said two groups of AND gates, in turn, are connected to two OR gates 36, 37 giving signal for the compressor (1 of figure 1) to become connected and disconnected according to the given temperature and voltage conditions. This is provided in that the OR gates 36 and 37 are connected to an SR flip-flop 38 (set-reset). The SR flip-flop 38, in turn, is connected to an OP circuit 39 which amplifies the signal and over a resistance 40 is driving a transistor 41 which is connecting and disconnecting respectively the maneuvre circuit 42, 43 of the compressor 1.

For a visible observation of the function of the apparatus there are light emitting diodes 44 and 45 which over transistor circuits 46 and 47 having resistances connected in series therewith are connected between the output of the voltage circuit 11 and the input of the three way switch 10. Further there is a cooling fan 49 controlled by a transistor circuit 48 including a resistance.

The function of the apparatus is the following :

When connecting «automatic» of the switch 10 the voltage selection system is connected to voltage and the comparators 17 and 18 observe if the motor is charging or not charging. The state of non-charging which is observed in that the pool voltage of the battery is less than 12,6 V or 26 V respectively the system automatically choses «the low energy alternative», whereby the temperature alternative -2°C to -6°C of the temperature system 12 is connected. This means that the AND gates 20 and 21 open when the temperature of the eutectic plate 3 has increased to -2 °C (according to the selected temperature system) and the compressor 1 starts. When the temperature has decreased to -6 °C (according to the selected temperature system) and the voltage from the NTC resistance 29 is balanced the AND gates 20 and 21 close and the voltage to the compressor is disconnected. Later, when the temperature of the eutectic plate 3 has once again increased to -2 °C and the voltage difference is at the adjusted value the AND gates 20 and 21 once again connect the compressor.

On the contrary, if the voltage system 11 has observed that the battery is being charged and consequently that the voltage over the battery pools are higher than 12,6 V or 26 V respectively «the high energy alternative» is connected and the second set of OCH gates 22 and 23 are connected. Said gates, in turn, operate for temperatures between -8 °C and -15 °C (according to the selected alternative) and connect the compressor for temperatures higher than -8 °C and disconnect the compressor when the temperature of the eutectic plate 3 has decreased to -15 °C. In this case the eutectic plate 3 has accumulated cooling energy which is sufficient to maintain the chilliness of the fridge or the cooling box for quiet a number of hours, in well isolated cooling boxes and when using a resonably large eutectic cooler plate for a period of 15-20 hours. The low temperature of -15 °C also is sufficient to keep freezed goods in freezed state for many hours.

In some cases it may be wanted to lower the temperature of the fridge or the cooling box to a level below -6 °C at periods when there is no charging of the battery, and in this case the switch 10 is set for positive control, that is the bottom position as shown in figure 2, whereby «the low energy alternative» is over bridged.

The light emitting diodes 44 and 45 under all conditions indicate the existing state and what type of cold storing that the compressor at the moment is executed and when the system is disconnected respectively.

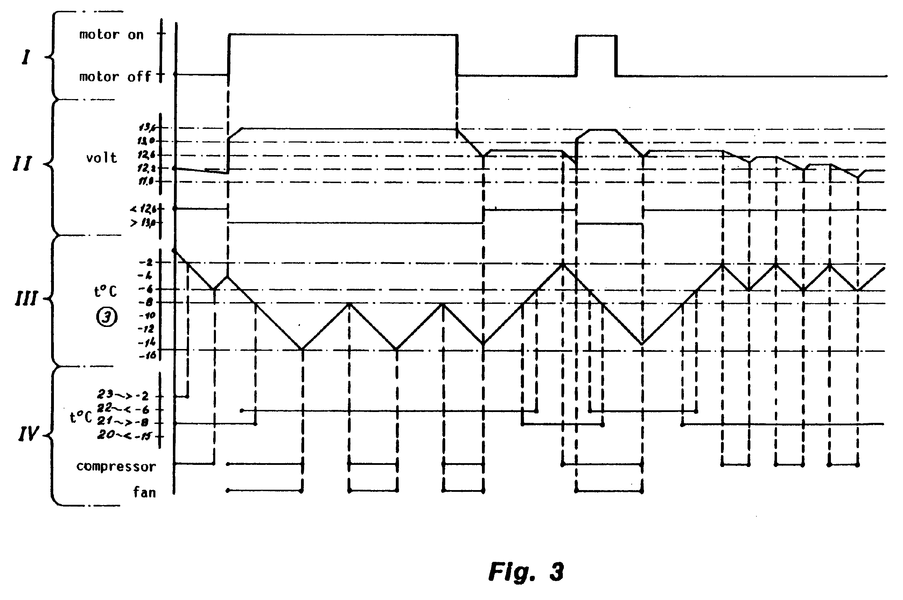

The operation scheme shown in figure 3 relates to a compressor driven refrigeration apparatus according to the invention which is driven by an internal combustion engine having a rechargeable accumulator battery. At the upper most part I of the scheme is indicated those periods at which the motor is running and consequently the periods when the battery is being charged. At the next vertical part II is illustrated how the voltage over the battery pools varies at running and non-running motor respectively and in connection thereto how the comparators 17 and 18 react and are made active. At pert III is illustrated how the cooling medium temperature of the eutectic plate changes when storing cold energy and when utilizing such cold energy during the different operation conditions and in connection thereto how the four OP amplifiers operate. At the last part IV of the scheme is shown those periods when the cooling compressor 1 and the cooling fan are connected and disconnected respectively. It may be noted in the scheme that there is a certain over lapping of functions of the OP amplifiers 21 and 22 depending on the fact that the voltage limit point in reality must be formed as a small voltage interval, viz. the interval between 12,6 and 13,0 V for a 12 V system. There are also corresponding values for a 24 V system.

It is obvious to the expert that the above specification is only an illustrating example which is not restricting the invention and that it is for instance possible to change the above mentioned temperature limits and/or the mentioned voltage levels at which the two alternatively cold storing systems are to be connected by a simple matching of the components included in the control system.

## Claims

1. A refrigeration apparatus comprising
a cold creating means (1, 2) arranged to be operated at different temperatures ranges by
one or more rechargeable accumulator batteries (8) arranged to be under electrical charging (9) and non-charging respectively, and having connected thereto
a cold emitting means (3) in the form of a eutectic plate (3) containing a fluid which begins to stiffen at a predetermined temperature below zero, and which is mounted in
a fridge or in a cooling box (4),
and in which the cold creating means (1, 2) and the cold emitting means (3) are connected to a control means (5) comprising
a voltage sensing means (11) for observing if the battery voltage is above or below a predetermined voltage level,
means for selecting different temperature operating ranges of the cold emitting means,
a temperature sensing means (12) for observing the upper and lower temperature levels of the selected temperature operating range of the cold emitting means,
and means (13,14, 38-41) for providing connection and disconnection of the cold creating means (1, 2) with the selected temperature operating range of the cold emitting means (3), **characterized**
in that the voltage sensing means (11) is arranged to observe if the voltage is above or below a predetermined charging voltage level for the accumulator battery or batteries,
in that the apparatus comprises an automatically operating temperature range selection means (13, 14) for actuating the cold creating means (1, 2) such as to automatically switch between two different temperature ranges for the cold emitting means (3), namely a low temperature operating range (e.g. -8 to -15°C) for the cold emitting means (3) during periods when the battery (8) or batteries is/are under charging and the voltage is above said predetermined charging voltage level, and a higher temperature operating range (e.g. -2 to -6°C) for the cold emitting means (3) during periods when the battery or batteries are not under charging and the voltage is below said level,
in that the voltage sensing means (11) comprises two comparators (17, 18) which are connected to the temperature sensing means (12), and one comparator (17 or 18) of which is arranged to take an active state at a voltage above the battery charging voltage level, thereby providing an operation of the cold creating means (1, 2) at said low temperature range, whereas the other one (18 or 17) is arranged to take an active state at a voltage below said battery charging voltage level, thereby providing an operation of the cold creating means (1, 2) at said high temperature range,
in that said two temperature operating ranges are selected such that the freezing/melting temperature (e.g. -8°C to -6°C) of the cold emitting means (3) is located between said two temperature ranges,
in that the temperature sensing means (12) of said control means (5) is arranged to observe the upper and lower temperature levels of both of said two different temperature operating ranges of the cold emitting means (3),
and in that said means (13, 14) for providing connection and disconnection respectively of the cold creating means (1, 2) is arranged to provide connection and disconnection within both the said high temperature range and said low temperature range for the cold emitting means (3).

2. Apparatus according to claim 1, **characterized** in that the comparators (17, 18) are calculated so that said predetermined voltage level corresponds to about 12,6 V for a 12 V battery system.

3. Apparatus according to any of the preceding claims, **characterized** in that the temperature sensing means comprises four OP amplifiers (20-23) which over suitable interconnected resistances (24-27) are adapted to take an active position at four different temperature levels, and in that the temperature of the cold emitting means (3) is transmitted as an electric signal to the OP amplifiers by one or more NTC resistances (29).

4. Apparatus according to claim 3, **characterized** in that two of the OP amplifiers (20-23) are connected to the comparator for voltages below the predermined voltage level, and that the two remaining OP amplifiers are connected to the comparator for voltages above the predetermined voltage level, and in that said first mentioned two OP amplifiers provide connection of the cold creating means (1) at a temperature of about -2°C and a disconnection at a temperature of about -6°C, whereas the two latter OP amplifiers provide connection at a temperature of about -8°C and a disconnection at a temperature of about -15°C.

5. Apparatus according to claim 4, **characterized** in that the control means comprises a trimming means (31) connected in series with the NTC resistance (29) for matching the apparatus to the said temperature levels.

6. Apparatus according to claim 4, **characterized** in that each one of the four OP amplifiers (20-23) is connected to respective AND gates (32-36), two AND-gates of which corresponding to the lower temperature levels of the two temperature difference ranges are connected to an OR gate (36 or 37), whereas the two remaining AND gates corresponding to the upper temperature levels of the two temperature difference ranges are connected to a second OR gate (37 or 36), whereby the first mentioned OR-gate by a RS flip-flop (38) provides connection of the cold creating means (1), whereas the second OR gate provides disconnection of the cold creating means.

7. Apparatus according to any of the preceding claims, **characterized** in that the apparatus comprises light emitting diodes (44, 45) indicating when the cold creating means (1) is operating at the lower voltage level and when the cold creating means operates at the higher voltage level respectively.

## Patentansprüche

1. Kühlvorrichtung mit einem Kälteerzeugungsmittel (1, 2), das so ausgebildet ist, daß es bei verschiedenen Temperaturbereichen betrieben wird von
einer oder mehreren aufladbaren Akkumulatorbatterien (8), die so angeordnet sind, daß sie elektrisch aufgeladen (9) bzw. nicht-aufgeladen werden, wobei sie verbunden sind mit
einem Kälteabgabemittel (3) in der Form einer eutektischen Platte (3), die ein Fluid enthält, das bei einer vorgegebenen Temperatur unter Null zu erstarren beginnt, und das
in einem Kühlschrank oder einer Kühlbox (4) angeordnet ist,
und wobei das Kälteerzeugungsmittel (1, 2) und das Kälteabgabemittel (3) mit einer Steuereinrichtung (5) gekoppelt sind, die aufweist:
ein Spannungsfühlermittel (11) zum Beobachten, ob die Batteriespannung oberhalb oder unterhalb eines vorgegebenen Spannungspegels liegt,
Mittel zum Auswählen verschiedener Betriebstemperaturbereiche der Kälteabgabemittel,
ein Temperaturfühlermittel (12) zur Überwachung des höheren und niedrigeren Temperaturpegels des ausgewählten Betriebstemperaturbereiches der Kälteabgabeeinrichtung,
und Mittel (13, 14, 38 - 41) zum Bewirken einer Verbindung bzw. Trennung des Kälteerzeugungsmittels (1, 2) mit dem ausgewählten Betriebstemperaturbereich des Kälteabgabemittels (3),
**dadurch gekennzeichnet,**
daß das Spannungsfühlermittel (11) derart ausgebildet ist, daß es feststellt, ob die Spannung oberhalb oder unterhalb eines vorgegebenen Aufladespannungspegels für die Akkumulatorbatterie- oder -batterien liegt,
daß die Vorrichtung ein automatisch arbeitendes Temperaturbereichsauswahlmittel (13, 14) zum derartigen Betätigen der Kälteerzeugungsmittel (1, 2) aufweist, daß automatisch zwischen zwei verschiedenen Temperaturbereichen für das Kälteabgabemittel (3) geschaltet wird, nämlich einem niedrigen Betriebstemperaturbereich (z. B. - 8 bis - 15°C) für das Kälteabgabemittel (3) während Perioden, in denen die Batterie (8) oder die Batterien im Aufladezustand ist/sind und die Spannung oberhalb des vorgegebenen Aufladespannungspegels liegt, und einem höheren Betriebstemperaturbereich (z. B. - 2 bis - 6°C) für die Kälteabgabeeinrichtung (3) während Perioden, in denen die Batterie oder die Batterien nicht im Aufladezustand ist/sind und die Spannung unterhalb dieses Pegels liegt,
daß das Spannungsfühlermittel (11) zwei Komperatoren (17, 18) aufweist, die mit dem Temperaturfühlermittel (12) verbunden sind und von denen einer (17 oder 18) derart ausgebildet ist, daß er bei einer Spannung oberhalb des Batterieaufladespannungspegels einen aktiven Zustand annimmt, wobei er einen Betrieb der Kälteerzeugungsmittel (1, 2) in dem niedrigen Temperaturbereich bewirkt, während der andere (18 oder 17) derart ausgebildet ist, daß er bei einer Spannung unterhalb des Batterieaufladepegels einen aktiven Zustand annimmt, wobei er einen Betrieb der Kälteerzeugungsmittel in dem hohen Temperaturbereich bewirkt,
daß die zwei Betriebstemperaturbereiche derart ausgewählt sind, daß die Erstarrungs/Schmelztemperatur (z.B. - 8 °C bis - 6 °C) des Kälteabgabemittels (3) sich zwischen den zwei Temperaturbereichen befindet,
daß das Temperaturfühlermittel (12) der Steuereinrichtung (5) derart ausgebildet ist, daß es die höheren und niedrigeren Temperaturpegel der beiden unterschiedlichen Betriebstemperaturbereiche des Kälteabgabemittels (3) überwacht,
und daß das Mittel (13, 14) zum Bewirken einer Verbindung bzw. Trennung der Kälteerzeugungsmittel (1, 2) derart ausgebildet ist, daß es eine Verbindung und Trennung sowohl in dem hohen Temperaturbereich als auch in dem niedrigen Temperaturbereich für das Kälteabgabemittel (3) bewirkt.

2. Vorrichtung nach Anspruch 1, **dadurch gekennzeichnet,** daß die Komperatoren (17, 18) so berechnet sind, daß der vorgegebene Spannungspegel etwa 12,6 Volt für ein 12-Volt-Batteriesystem entspricht.

3. Vorrichtung nach einem der vorangegangenen Ansprüche, **dadurch gekennzeichnet,** daß das Temperaturfühlermittel vier OP-Verstärker (20-23) aufweist, die über geeignet verbundene Widerstände (24-27) angepaßt sind, eine aktive Position an vier unterschiedlichen Temperaturpegeln anzunehmen, und daß die Temperatur des Kälteabgabemittels (3) durch einen oder mehrere NTC-Widerstände (29) als elektrisches Signal an die OP-Verstärker angelegt wird.

4. Vorrichtung nach Anspruch 3, **dadurch gekennzeichnet,** daß zwei der OP-Verstärker (20-23) mit dem Komperator bei Spannungen unterhalb des vorgegebenen Spannungspegels verbunden sind und daß die beiden restlichen OP-Verstärker bei Spannungen oberhalb des vorgegebenen Spannungspegels mit dem Komperator verbunden sind und daß die beiden zuerst genannten OP-Verstärker eine Einschaltung des Kälteerzeugungsmittels (1) bei einer Temperatur von etwa - 2°C und eine Abschaltung bei einer Temperatur von etwa - 6°C bewirken, während die beiden zuletzt genannten OP-Verstärker eine Einschaltung bei einer Temperatur von etwa - 8°C und eine Abschaltung bei einer Temperatur von etwa - 15°C bewirken.

5. Vorrichtung nach Anspruch 4, **dadurch gekennzeichnet,** daß die Steuereinrichtung ein der Anpassung der Vorrichtung an die Temperaturpegel dienendes Trimmittel (31) aufweist, das mit dem NTC-Widerstand (29) in Reihe geschaltet ist.

6. Vorrichtung nach Anspruch 4, **dadurch gekennzeichnet,** daß die vier OP-Verstärker (20-23) jeweils mit einem UND-Gatter (32-36) verbunden sind, von denen zwei UND-Gatter entsprechend den niedrigeren Temperaturpegeln der beiden Temperaturdifferenzgruppen mit einem ODER-Gatter (36 oder 37) verbunden sind, während die beiden restlichen UND-Gatter entsprechend den höheren Temperaturpegeln der beiden Temperaturdifferenzgruppen mit einem zweiten ODER-Gatter (37 oder 36) verbunden sind, wodurch das zuerst erwähnte ODER-Gatter über einen RS-Flipflop (38) das Kälteerzeugungsmittel (1) anschaltet, während das zweite ODER-Gatter das Kälteerzeugungsmittel abschaltet.

7. Vorrichtung nach einem der vorangegangenen Ansprüche, **dadurch gekennzeichnet,** daß die Vorrichtung lichtemitierende Dioden (44, 45) aufweist, die anzeigen, wenn die Kälteerzeugungsmittel (1) bei dem niedrigeren Spannungspegel arbeiten bzw. wenn die Kälteerzeugungsmittel bei dem höheren Spannungspegel arbeiten.

## Revendications

1. Appareil de réfrigération comprenant :
des moyens producteurs de froid (1, 2) agencés pour être alimentés à différents intervalles de température,
une ou plusieurs batteries (8) d'accumulateurs rechargeables agencées pour être respectivement en cours de charge électrique (9) et non en cours de charge, et auxquelles sont connectés
des moyens émetteurs de froid (3) revêtant la forme d'une plaque eutectique (3) contenant un fluide qui commence à se congeler à une température prédéterminée inférieure à zéro et qui sont montés dans
un réfrigérateur ou une enceinte réfrigérée (4),
et dans lequel les moyens producteurs de froid (1, 2) et les moyens émetteurs de froid (3) sont connectés à des moyens de commande (5), comprenant
des moyens capteurs de tension (11) destinés à surveiller si la tension de la batterie ou des batteries est supérieure ou inférieure à un niveau de tension prédéterminé,
des moyens servant à choisir différents intervalles de travail à température des moyens émetteurs de froid,
des moyens capteurs de température (12) servant à surveiller les niveaux de température supérieur et inférieur de l'intervalle de travail à température choisi des moyens émetteurs de froid, et
des moyens (13, 14, 38-41) servant à commander la connexion et la déconnexion des moyens producteurs de froid (1, 2) selon l'intervalle de travail à température choisi des moyens émetteurs de froid (3), caractérisé
en ce que les moyens capteurs de tension (11) sont agencés pour surveiller si la tension est supérieure ou inférieure à un niveau de tension de charge prédéterminé pour la ou les batteries d'accumulateurs,
en ce que l'appareil comprend des moyens (13, 14) de sélection de l'intervalle de température travaillant automatiquement, destinés à actionner les moyens producteurs de froid (1, 2) de manière à commuter automatiquement entre deux différents intervalles de température pour les moyens émetteurs de froid (1, 2), plus précisément un intervalle de travail à basse température (par exemple -8 à -15°C) pour les moyens émetteurs de froid (3) pendant les périodes où la batterie (8) ou les batteries est ou sont en charge, et la tension est supérieure audit niveau de tension de charge prédéterminé, et un intervalle de travail à température plus élevée (par exemple -2 à -6°C) pour les moyens émetteurs de froid (3) pendant des périodes où la batterie ou les batteries n'est pas ou ne sont pas en charge et la tension est inférieure audit niveau ;
en ce que les moyens capteurs de tension (11) comprennent deux comparateurs (17, 18) qui sont connectés aux moyens capteurs de température (12), et un premier de ces comparateurs (17 ou 18) est agencé pour prendre un état actif à une tension supérieure au niveau de tension de charge de la batterie ou des batteries, en assurant ainsi le fonctionnement des moyens producteurs de froid (1, 2) audit intervalle de basse température, tandis que l'autre (18 ou 17) est agencé pour prendre un état actif à une tension inférieure au niveau de tension de charge de la batterie ou des batteries, en commandant ainsi le fonctionnement des moyens producteurs de froid (1, 2) audit intervalle de température élevée,
en ce que les deux intervalles de température précités sont sélectionnés de manière que la température de congélation/fusion (par exemple -8°C à -6°C) des moyens émetteurs de froid (3) soit située entre ces deux intervalles de température,
en ce que les moyens capteurs de température (12) desdits moyens de commande (5) sont agencés pour surveiller les niveaux de températures supérieur et inférieur des deux intervalles de travail à température différents des moyens émetteurs de froid (3),
et en ce que lesdits moyens (13, 14) servant à commander respectivement la connexion et la déconnexion des moyens producteurs de froid (1, 2) sont agencés pour commander la connexion et la déconnexion aussi bien dans ledit intervalle de température élevée que dans ledit intervalle de température basse pour les moyens émetteurs de froid (3).

2. Appareil selon la revendication 1, caractérisé en ce que les comparateurs (17, 18) sont calculés de telle manière que ledit niveau de tension prédéterminé corresponde à environ 12,6 V pour une installation à batterie de 12V.

3. Appareil selon une quelconque des revendications précédentes, caractérisé en ce que les moyens capteurs de température comprennent quatre amplificateurs OP (amplificateurs opérationnels) (20-23) qui sont adaptés, par l'intermédiaire de résistances appropriées interconnectées (24-27), pour prendre une position active à quatre niveaux de température différents et en ce que la température des moyens émetteurs de froid (3) est transmise sous la forme d'un signal électrique aux amplificateurs OP par une ou plusieurs résistances NTC (à coefficient de température négatif) (29).

4. Appareil selon la revendication 3, caractérisé en ce que deux des amplificateurs OP (20-23) sont connectés au comparateur pour des tensions inférieures au niveau de tension prédéterminé et en ce que les deux autres amplificateurs OP sont connectés au comparateur pour des tensions supérieures au niveau de tension prédéterminé et en ce que les deux amplificateurs OP mentionnés en premier établissent la connexion des moyens producteurs de froid (1) à une température d'environ -2°C et leur déconnexion à une température d'environ -6°C, tandis que les deux derniers amplificateurs OP établissent la connexion à une température d'environ -8°C et la déconnexion à une température d'environ -15°C.

5. Appareil selon la revendication 4, caractérisé en ce que les moyens de commande comprennent des moyens de réglage (31) connectés en série avec la résistance NTC (29) pour adapter l'appareil auxdits niveaux de température.

6. Appareil selon la revendication 4, caractérisé en ce que les quatre amplificateurs OP (20-23) sont connectés chacun à une porte ET respective (32-36), deux portes ET correspondant aux niveaux de température inférieurs des deux intervalles de différence de température sont connectés à une porte OU (36 ou 37), tandis que les deux portes ET restantes qui correspondent aux niveaux de température supérieurs des deux intervalles de différence de températures sont connectés à une deuxième porte OU (37 ou 36), de sorte que la porte OU mentionnée en premier commande la connexion des moyens producteurs de froid (1) par une bascule RS (mise à un - remise à zéro) (38) tandis que la deuxième porte OU commande la déconnexion des moyens producteurs de froid (3).

7. Appareil selon une quelconque des revendications précédentes, caractérisé en ce que l'appareil comprend des diodes électroluminescentes (44, 45) qui indiquent le moment où les moyens producteurs de froid (1) travaillent au niveau de température inférieur et le moment où les moyens producteurs de froid travaillent au niveau supérieur respectivement.
